# FASCICULE DE BREVET EUROPEEN

(11) **EP 2 174 000 B1**
(45) Date de publication et mention de la délivrance du brevet: **14.12.2016**
(21) Numéro de dépôt: 08826706.7
(22) Date de dépôt: 23.07.2008
(51) Int. Cl.: F03B 11/04, F03B 11/00, F03B 3/12, F03B 1/04

(54) **MACHINE HYDRAULIQUE DE TYPE PELTON COMPRENANT DES MOYENS D'INJECTION D'UN ÉCOULEMENT PRÉLEVÉ D'UN ÉCOULEMENT PRINCIPAL**
HYDRAULISCHE PELTON-MASCHINE MIT MITTEL ZUR INJEKTION EINES AUS EINEM HAUPTFLUSS GEZOGENEN FLUSSES
PELTON HYDRAULIC MACHINE INCLUDING MEANS FOR INJECTING A FLOW DRAWN FROM A MAIN FLOW

(30) Priorité: 23.07.2007 FR 0705332
(43) Date de publication de la demande: 14.04.2010
(73) Titulaire: ALSTOM Renewable Technologies, 38100 Grenoble (FR)
(72) Inventeur: MAZZOUJI, Farid, F-38210 Vourey (FR); TRAVERSAZ, Monique, F-38610 Gieres (FR)
(74) Mandataire: Brannen, Joseph Waclaw
(86) Numéro de dépôt international: PCT/FR2008/051386
(87) Numéro de publication internationale: WO 2009/016316

(56) Documents cités:
- WO-A-2005/103486
- JP-A- 5 005 478
- US-A- 1 942 995

## Description

La présente invention concerne une machine hydraulique du type de type Pelton traversée par un écoulement principal d'eau, comprenant au moins un collecteur d'une turbine Pelton, au voisinage duquel se forme au moins une zone tourbillonnaire ou une zone de pression réduite.

Une telle machine hydraulique est utilisée, par exemple dans une usine de production d'hydro-électricité. La machine est installée au fil de l'eau ou est alimentée en eau à partir d'un réservoir dans lequel se déverse un ou plusieurs cours d'eau.

Une machine hydraulique du type turbine Pelton est connue du document WO2005/103486.

Dans ces machines hydrauliques, il existe des zones dans lesquelles l'écoulement principal traversant la machine est perturbé et forme des tourbillons ou présente une pression réduite, du fait de la configuration de la machine. De telles zones perturbent les performances générales de la machine hydraulique car elles réduisent l'efficacité d'action de l'écoulement principal dans la machine hydraulique ou occasionnent des problèmes de fonctionnement de la machine hydraulique.

L'un des buts de l'invention est de pallier ces inconvénients en proposant une machine hydraulique de type Pelton permettant de supprimer les zones tourbillonnaires ou de pression réduite.

A cet effet, l'invention concerne une machine hydraulique de type Pelton du type précité, comprenant des moyens d'injection d'un écoulement prélevé dudit écoulement principal, non modifié par rapport à l'écoulement principal, dans ladite zone tourbillonnaire ou de pression réduite de sorte à modifier localement l'écoulement principal ou augmenter la pression dans cette zone.

L'injection d'un écoulement prélevé de l'écoulement principal dans les zones tourbillonnaires ou de pression réduite permet de combler efficacement le manque de performance de l'action de l'écoulement principal dans ces zones, ce qui améliore les performances et le comportement de la machine hydraulique.

Selon d'autres caractéristiques de la machine hydraulique :
- les moyens d'injection comprennent au moins une conduite comprenant une entrée prélevant un écoulement de l'écoulement principal en amont du collecteur et une sortie débouchant dans la zone tourbillonnaire ou de pression réduite,
- les moyens d'injection comprennent une soupape disposée dans le trajet de l'écoulement prélevé, ladite soupape étant mobile entre une position ouverte dans laquelle elle laisse passer l'écoulement prélevé de l'écoulement principal et une position fermée dans laquelle elle empêche le passage de l'écoulement prélevé,
- le mouvement de la soupape est commandé par des moyens de commande appropriés. Selon la présente invention,
- la zone tourbillonnaire ou de pression réduite se forme au voisinage des bifurcations du collecteur, les moyens d'injections étant agencés pour prélever l'écoulement prélevé de l'écoulement principal en amont desdites bifurcations et pour injecter l'écoulement prélevé au voisinage desdites bifurcations.

D'autres aspects et avantages de l'invention apparaîtront au cours de la description qui suit, donnée à titre d'exemple et faite en référence au dessin annexé dans lequel :

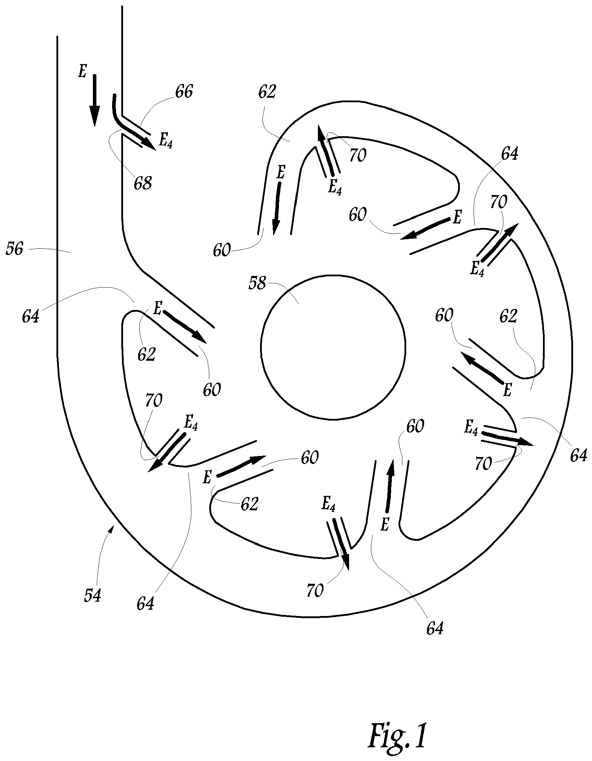

- la Fig. 1 est une représentation schématique en coupe d'une turbine de Pelton selon l'invention.

L'invention décrite ci-dessous s'applique à une machine hydraulique du type turbine Pelton. Cette machine étant connue, elles n'est pas décrite en détail dans la présente description. L'invention s'applique également à d'autres types de machines hydrauliques dans lesquelles des problèmes de formation de zones tourbillonnaires, de pression réduite se posent.

Dans la description, les termes « amont » et « aval » sont définis par rapport au sens d'écoulement de l'écoulement principal E traversant la machine hydraulique.

Sur la Fig. 1, on a représenté schématiquement une turbine Pelton 54.

La turbine Pelton 54 comprend un collecteur 56 entraînant une roue 58 en rotation au moyen d'un écoulement principal E circulant dans le collecteur 56 et injecté vers la roue 58 par l'intermédiaire de zones d'injection 60. Le collecteur 56 entoure la roue 58 et les zones d'injection 60 saillent du collecteur 56 vers la roue 58 par l'intermédiaire de bifurcations 62, comme représenté Fig. 6 et de façon connue.

Des zones 64 tourbillonnaires et de pression réduite se créent au voisinage de chaque bifurcation 62 ce qui affecte les performances de la turbine Pelton.

Afin de pallier cet inconvénient, le collecteur 56 comprend des moyens d'injection d'un écoulement E₄, prélevé de l'écoulement principal E en amont des bifurcations 62, dans les zones 64 au voisinage des bifurcations 62. Les moyens d'injection comprennent par exemple une ou plusieurs conduites 66 (partiellement représentées) comprenant une ouverture d'entrée 68 débouchant dans le collecteur 56 en amont des bifurcations 62 et une ouverture de sortie 70 débouchant au voisinage des bifurcations 62, par exemple en amont de celles-ci. L'ouverture d'entrée 68 prélève l'écoulement E₄ de l'écoulement principal E et la conduite 66 amène cet écoulement prélevé E₄ à l'ouverture de sortie 70 où l'écoulement prélevé E4 est injecté dans les zones 64. L'écoulement E₄ permet de modifier l'écoulement principal E dans les zones 64 pour homogénéiser celui-ci dans les zones d'injection 60.

Selon un mode de réalisation applicable, les moyens d'injection comprennent une soupape (non représentée) disposée dans le trajet de l'écoulement prélevé. La soupape est mobile entre une position ouverte dans laquelle elle laisse passer l'écoulement prélevé et une position fermée dans laquelle elle empêche le passage de l'écoulement prélevé. La soupape est par exemple disposée au voisinage de chaque ouverture d'entrée des moyens d'injection et permet de commander de façon manuelle ou automatique l'injection de l'écoulement prélevé.

Le mouvement de la soupape est commandé par des moyens de commande (non représentés), mécaniques ou électriques de façon connue en soi. Ainsi, lors de régimes de fonctionnement de la machine hydraulique entraînant la formation de zones tourbillonnaires ou de pression réduite ou de cavitation, un automatisme ou un opérateur de la machine fait passer la ou les soupapes dans la position ouverte ce qui permet d'injecter l'écoulement prélevé dans lesdites zones et de prévenir la formation de ces zones, comme décrit ci-dessus.

Il convient de noter que l'écoulement prélevé n'est pas modifié par rapport à l'écoulement principal E, c'est-à-dire que l'eau ne subit pas d'opération de modification de sa composition au cours de l'écoulement prélevé.

## Revendications

1. Machine hydraulique de type Pelton traversée par un écoulement (E) principal d'eau, comprenant au moins un collecteur (56) d'une turbine Pelton (54), au voisinage duquel se forme au moins une zone tourbillonnaire ou une zone de pression réduite (64), la machine hydraulique comprenant des moyens d'injection d'un écoulement prélevé (E₄) dudit écoulement principal, non modifié par rapport à l'écoulement principal (E), dans ladite zone (64) tourbillonnaire ou de pression réduite de sorte à modifier localement l'écoulement principal (E) ou augmenter la pression dans cette zone (64) **caractérisé en ce que** la zone (64) tourbillonnaire ou de pression réduite se forme au voisinage des bifurcations (62) du collecteur (56), les moyens d'injections étant agencés pour prélever l'écoulement prélevé (E₄) de l'écoulement principal (E) en amont desdites bifurcations (62) et pour injecter l'écoulement prélevé (E₄) au voisinage desdites bifurcations (62).

2. Machine hydraulique selon la revendication 1, **caractérisée en ce que** les moyens d'injection comprennent au moins une conduite (66) comprenant une entrée prélevant un écoulement (E₄) de l'écoulement principal (E) en amont du collecteur (56) et une sortie débouchant dans la zone tourbillonnaire ou de pression réduite (64).

3. Machine hydraulique selon la revendication 2, **caractérisée en ce que** les moyens d'injection comprennent une soupape disposée dans le trajet de l'écoulement prélevé (E₄), ladite soupape étant mobile entre une position ouverte dans laquelle elle laisse passer l'écoulement prélevé (E₄) de l'écoulement principal (E) et une position fermée dans laquelle elle empêche le passage de l'écoulement prélevé (E₄).

4. Machine hydraulique selon la revendication 3, **caractérisée en ce que** le mouvement de la soupape est commandé par des moyens de commande appropriés.

## Patentansprüche

1. Hydraulische Pelton-Maschine, die von einer Hauptwasserströmung (E) durchquert wird, die mindestens eine Sammelleitung (56) einer Pelton-Turbine (54) enthält, in deren Nähe sich mindestens eine Wirbelzone oder eine Zone verringerten Drucks (64) bildet, wobei die hydraulische Maschine Einspritzeinrichtungen einer von der Hauptströmung entnommenen Strömung (E₄), unverändert bezüglich der Hauptströmung (E), in die Wirbelzone (64) oder Zone verringerten Drucks enthält, um die Hauptströmung (E) lokal zu verändern oder den Druck in dieser Zone (64) zu erhöhen, **dadurch gekennzeichnet, dass** dass die Wirbelzone (64) oder Zone verringerten Drucks sich in der Nähe der Abzweigungen (62) der Sammelleitung (56) bildet, wobei die Einspritzeinrichtungen eingerichtet sind, um die von der Hauptströmung (E) entnommene Strömung (E₄) stromaufwärts vor den Abzweigungen (62) zu entnehmen und um die entnommene Strömung (E₄) in der Nähe der Abzweigungen (62) einzuspritzen.

2. Hydraulische Maschine nach Anspruch 1, **dadurch gekennzeichnet, dass** die Einspritzeinrichtungen mindestens eine Leitung (66) enthalten, die einen Eingang, der eine Strömung (E₄) von der Hauptströmung (E) stromaufwärts vor der Sammelleitung (56) entnimmt, und einen Ausgang enthält, der in der Wirbelzone oder der Zone verringerten Drucks (64) mündet.

3. Hydraulische Maschine nach Anspruch 2, **dadurch gekennzeichnet, dass** die Einspritzeinrichtungen ein Ventil enthalten, das auf dem Weg der entnommenen Strömung (E₄) angeordnet ist, wobei das Ventil zwischen einer offenen Stellung, in der es die von der Hauptströmung (E) entnommene Strömung (E₄) durchlässt, und einer geschlossenen Stellung beweglich ist, in der es den Durchgang der entnommenen Strömung (E₄) verhindert.

4. Hydraulische Maschine nach Anspruch 3, **dadurch gekennzeichnet, dass** die Bewegung des Ventils von geeigneten Steuereinrichtungen gesteuert wird.

## Claims

1. Pelton type hydraulic machine traversed by a main flow (E) of water, comprising at least one manifold (56) of a Pelton turbine (54), in the vicinity of which is formed at least one eddy zone or a reduced-pressure zone (64), the hydraulic machine comprising means for injecting a flow (E₄) tapped from the said main flow, not modified relative to the main flow (E), in the said eddy or reduced-pressure zone (64) so as to locally modify the main flow (E) or increase the pressure in this zone (64), **characterized in that** the eddy or reduced-pressure zone (64) is formed in the vicinity of the bifurcations (62) of the said manifold (56), the injection means being arranged to tap off the tapped flow (E₄) from the main flow (E) upstream of the said bifurcations (62) and to inject the tapped flow (E₄) in the vicinity of the said bifurcations (62).

2. Hydraulic machine according to Claim 1, **characterized in that** the injection means comprise at least one duct (66) comprising an inlet tapping off a flow (E₄) from the main flow (E) upstream of the manifold (56) and an outlet opening into the eddy or reduced-pressure zone (64).

3. Hydraulic machine according to Claim 2, **characterized in that** the injection means comprise a valve placed in the path of the tapped flow (E₄), the said valve being able to be moved between an open position in which it allows the tapped flow (E₄) to pass from the main flow (E) and a closed position in which it prevents the passage of the tapped flow (E₄).

4. Hydraulic machine according to Claim 3, **characterized in that** the movement of the valve is controlled by suitable control means.
